(19) Europäisches Patentamt
European Patent Office
Office européen des brevets

(11) **EP 4 443 766 A1**

(12) **EUROPEAN PATENT APPLICATION**

(43) Date of publication:
**09.10.2024 Bulletin 2024/41**

(21) Application number: **24155661.2**

(22) Date of filing: **05.02.2024**

(51) International Patent Classification (IPC):
**H04B 7/185** (2006.01)  **H04W 56/00** (2009.01)
**H04W 84/06** (2009.01)

(52) Cooperative Patent Classification (CPC):
**H04W 56/0045; H04B 7/18513; H04W 56/001;**
H04W 84/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 US 202363457500 P**

(71) Applicant: **Nokia Technologies Oy
02610 Espoo (FI)**

(72) Inventors:
• **AHMADZADEH, Arman
Munich (DE)**
• **MARCONE, Alessio
Munich (DE)**
• **FREDERIKSEN, Frank
Klarup (DK)**

(74) Representative: **Nokia EPO representatives
Nokia Technologies Oy
Karakaari 7
02610 Espoo (FI)**

(54) **NETWORK-ASSISTED DEMODULATION REFERENCE SIGNAL BUNDLING FRAMEWORK**

(57) In accordance with example embodiments of the invention there is at least a method and apparatus to perform transmitting an indication of a base time window to a user equipment; acquiring time drift information of the non-terrestrial network; determining an adjustment value at least based on the time drift information; and transmitting the adjustment value to the user equipment, the adjustment value adjusting the base time window where during the adjusted time window a predetermined at least one radio characteristic remains within predeter-mined limits, and receiving, by a user equipment an indication of a base time window; and receiving an adjustment value based at least on time drift information, determining an adjusted time window by adjusting the base time window based on the adjustment value, during the adjusted time window predetermined radio characteristic(s) remain within predetermined limits, and performing coverage enhancement procedure during the adjusted time window.

```
┌─────────────────────────────────────────────────────────────┐
│ 810: transmitting, by a network node of a non-terrestrial    │
│ network, an indication of a base time window to a user       │
│ equipment                                                     │
└─────────────────────────────────────────────────────────────┘
                              │
                              ▼
┌─────────────────────────────────────────────────────────────┐
│ 820: acquiring time drift information of the non-terrestrial  │
│ network                                                       │
└─────────────────────────────────────────────────────────────┘
                              │
                              ▼
┌─────────────────────────────────────────────────────────────┐
│ 830: determining an adjustment value based at least on the    │
│ time drift information;                                        │
└─────────────────────────────────────────────────────────────┘
                              │
                              ▼
┌─────────────────────────────────────────────────────────────┐
│ 840: transmitting the adjustment value to the user equipment, │
│ wherein the adjustment value is adjusting the base time window │
│ such that during the adjusted time window a predetermined at   │
│ least one radio characteristic remains within predetermined    │
│ limits                                                         │
└─────────────────────────────────────────────────────────────┘
```

FIG. 8A

**Description**

TECHNICAL FIELD:

The teachings in accordance with the exemplary embodiments of this invention relate generally to improved operations for at least demodulation reference signal bundling operations and, more specifically, relate to improved operations for at least demodulation reference signal bundling operations including time domain window configuration based on a current drift experienced by a user equipment.

BACKGROUND:

This section is intended to provide a background or context to example embodiments of the invention such as recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.
Certain abbreviations that may be found in the description and/or in the Figures are herewith defined as follows:

ACK:        Acknowledgment
aTDW:       actual TDW
CSI:        Channel State information
DM-RS:      Demodulation Reference Signal
gNB:        Next Generation node B
L1:         Layer 1
L2:         Layer 2
NACK:       Not-Acknowledgment
nTDW:       nominal TDW
PUSCH:      Physical Uplink Shared Channel
PUCCH:      Physical Uplink Control Channel
SIB:        System information Block
SR:         Scheduling Request
TA:         Timing Advance
TDW:        Time Domain Window
UE:         User Equipment
UCI:        Uplink Control Information
DCI:        Downlink Control Information
NR:         New Radio
TB:         Transport Block

In New Radio (NR) standards, coverage enhancement via DM-RS bundling framework was introduced to enable improved channel estimation for PUSCH/PUCCH. Some of the important aspects of DM-RS bundling framework are summarized as follows:

- DM-RS bundling used for PUSCH repetition Type A scheduled by DCI format 0_1 or 0_2, for PUSCH repetition Type A with configured grant, for PUSCH repetition Type B, for transport block (TB) processing over multiple slots PUSCH and for PUCCH repetitions of PUCCH formats 1, 3, and 4;

- A UE can report the maximum duration (maxDMRS-BundlingDuration), in number of consecutive slots, during which the UE is able to maintain power consistency and phase continuity under certain tolerance level;

- With the duration of the nominal TDWs (time domain windows) not longer than the maximum duration, configured by gNB, one or multiple nominal TDWs can be determined for PUSCH transmissions or PUCCH repetitions;

- A nominal TDW consists of one or multiple actual TDWs. Events, which cause power consistency and phase continuity not to be maintained across PUSCH transmissions or PUCCH repetitions within the nominal TDW, are defined;

- An actual TDW is terminated in case an event occurs. A new actual TDW is created in response to semi-static events not triggered by DCI or medium access control-control element (MAC-CE). Whether a new actual TDW is created in response to dynamic events triggered by DCI is subject to UE capability;

- The UE shall maintain power consistency and phase continuity within an actual TDW across PUSCH transmissions or PUCCH repetitions

DM-RS bundling is a technique that can jointly be exploited with PUSCH repetitions to help improving the performance of channel estimation algorithms at gNB and provide performance gain. However, to be able to realize the promised performance gain of DM-RS bundling, several conditions need to be met first. The two most important criterions are power consistency and phase continuity.

Example embodiments of this invention proposes improved operations for at least demodulation reference signal bundling operation.

SUMMARY:

This section contains examples of possible implementations and is not meant to be limiting.

In an example aspect of the invention, there is an apparatus, such as a network side apparatus, comprising: at least one processor; and at least one non-transitory memory storing instructions, that when executed by the at least one processor, cause the apparatus at least to: transmit, by a network node of a non-terrestrial network, an indication of a base time window to a user equipment; acquire time (or timing) drift information of the non-terrestrial network; determine an adjustment value at least based on the time drift information; and transmit the adjustment value to the user equipment, wherein the adjustment value is for adjusting the base time window such that during the adjusted time window a predetermined at least one radio characteristic remains within predetermined limits.

In another example aspect of the invention, there is a method comprising: transmitting, by a network node of a non-terrestrial network, an indication of a base time window to a user equipment; acquire time (or timing) drift information of the non-terrestrial network; determining an adjustment value based at least on the time (or timing) drift information; and transmitting the adjustment value to the user equipment, wherein the adjustment value is for adjusting the base time window such that during the adjusted time window a predetermined at least one radio characteristic remains within predetermined limits.

A further example embodiment is an apparatus and a method comprising the apparatus and the method of the previous paragraphs, wherein the indication of the base time window comprises an indication of a nominal time domain window and the adjustment value comprises a value for adjusting the nominal time domain window, wherein the indication of base time window comprises an indication of a base uplink segment and the adjustment value comprises a value for adjusting the base uplink segment, wherein the indication of base time window comprises an indication of at least one of base time advance update rate or periodicity and the adjustment value comprises a value for adjusting at least one of the base time advance update rate or periodicity, wherein the update rate or periodicity of the time advance is determined with respect to a starting slot, wherein the starting slot is pre-defined or an indication of the starting slot is received from the network node, wherein the starting slot is the slot at which one of physical uplink shared channel repetitions begin or at least one coverage enhancement procedure is started at the user equipment, wherein the predetermined at least one radio characteristic comprises at least one of the following for communication between the user equipment and the network node: timing advance, phase, and power, wherein the transmission of the indication of the base time window is performed over higher layer communication, and/or wherein transmitting the adjustment value is performed over lower layer communication.

A non-transitory computer-readable medium storing program code, the program code executed by at least one processor to perform at least the method as described in the paragraphs above.

In another example aspect of the invention, there is an apparatus comprising: means for transmitting, by a network node of a non-terrestrial network, an indication of a base time window to a user equipment; acquire time drift information of the non-terrestrial network; means for determining an adjustment value based at least on the time drift information; and means for transmitting the adjustment value to the user equipment, wherein the adjustment value is for adjusting the base time window such that during the adjusted time window a predetermined at least one radio characteristic remains within predetermined limits.

In accordance with the example embodiments as described in the paragraph above, at least the means for transmitting and determining comprises a network interface, and computer program code stored on a computer-readable medium and executed by at least one processor.

In another example aspect of the invention, there is an apparatus, such as a user equipment side apparatus, comprising: at least one processor; and at least one non-transitory memory storing instructions, that when executed by the at least one processor, cause the apparatus at least to: receive, by a user equipment from a network node of a non-terrestrial network, an indication of a base time window; and receive an adjustment value, wherein the adjustment value is based at least on time drift information of the non-terrestrial network, determine an adjusted time window by adjusting the base time window based on the adjustment value, wherein during the adjusted time window a predetermined at least one radio characteristic remains within predetermined limits; and perform coverage enhancement procedure during the adjusted time window.

In another example aspect of the invention, there is a method comprising: receiving, by a user equipment from a network node of a non-terrestrial network, an indication of a base time window; and receiving an adjustment value, wherein the adjustment value is based at least on time drift information of the non-terrestrial network, determining an adjusted time window by adjusting the base time window based on the adjustment value, wherein during the adjusted time window a predetermined at least one radio characteristic remains within predetermined limits; and performing coverage enhancement procedure during the adjusted time window.

A further example embodiment is an apparatus and a method comprising the apparatus and the method of the previous paragraphs, wherein the indication of the base time window comprises an indication of a nominal time domain window and the adjustment value comprises a value for adjusting the nominal time domain window, wherein the indication of base time window comprises an indication of a base uplink segment and the adjustment value comprises a value for adjusting the base uplink segment, wherein the indication of base time window comprises an indication of at least one of base time advance update rate or periodicity and the adjustment value comprises a value for adjusting at least one of the base time advance update rate or periodicity, wherein the update rate or periodicity of the time advance is determined with respect to a starting slot, wherein the starting slot is pre-defined or an indication of the starting slot is received from the network node, wherein the starting slot is the slot at which one of physical uplink shared channel repetitions begin or at least one coverage enhancement procedure is started at the user equipment, wherein the predetermined at least one radio characteristic comprises at least one of the following for communication between the user equipment and the network node: timing advance, phase, and power, wherein receiving the indication of the base time window is performed over higher layer communication, and/or wherein receiving the adjustment value is performed over lower layer communication.

A non-transitory computer-readable medium storing program code, the program code executed by at least one processor to perform at least the method as described in the paragraphs above.

In another example aspect of the invention, there is an apparatus comprising: means for receiving, by a user equipment for a network node of a non-terrestrial network, an indication of a base time window; and receive an adjustment value, wherein the adjustment value is for adjusting the base time window such that during the adjusted time window a predetermined at least one radio characteristic remains within predetermined limits, wherein the adjustment value is based at least on time drift information from the non-terrestrial network.

In accordance with the example embodiments as described in the paragraph above, at least the means for receiving comprises a network interface, and computer program code stored on a computer-readable medium and executed by at least one processor.

A communication system comprising the network side apparatus and the user equipment side apparatus performing operations as described above.

BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:

FIG. 1 shows (left) Timing drift (or time drift) vs elevation angle and (right) a maximum DM-RS bundle size vs elevation angle;

FIG. 2A shows a NPUSCH-Config-NB information element;

FIG. 2B shows a "UE-EUTRA-Capability" information element used to send "ntn-SegmentedPrecompensationGaps-r17;

FIG. 2C shows time domain window operations;

FIG. 2D shows a modulation coding scheme index with a last two bits ($b_3b_4$) used to indicate the value of expansion for a time domain window;

FIG. 2E shows a modulation coding scheme index with a last two bits ($b_3b_4$) used to indicate the value of shrinking for a time domain window;

FIG. 3 shows a flow chart of an Example "1" Embodiment "a" in accordance with example embodiments of the invention;

FIG. 4 shows a flow chart of an Example "2" Embodiment "b" in accordance with example embodiments of the invention;

FIG. 5 shows a flow chart of an Example "3" Embodiment "c" in accordance with example embodiments of the invention;

FIG. 6 shows a DMRS-BundlingPUSCH-Config information element in accordance with example embodiments of the invention;

FIG. 7 shows a high level block diagram of various devices used in carrying out various aspects of the invention; and

FIG. 8A and FIG. 8B each show a method in accordance with example embodiments of the invention which may be performed by an apparatus.

DETAILED DESCRIPTION:

In example embodiments of this invention there is proposed at least a method and apparatus for improved operations for at least demodulation reference signal bundling operations including time domain window configuration based on a current drift experienced by a user equipment.

DM-RS bundling framework

In the Rel-17 NR coverage enhancement work item, DM-RS bundling framework was introduced to enable improved channel estimation for PUSCH/PUCCH. Some of the important aspects of DM-RS bundling framework are summarized as follows:

- DM-RS bundling used for PUSCH repetition Type A scheduled by DCI format 0_1 or 0_2, for PUSCH repetition Type A with configured grant, for PUSCH repetition Type B, for TB processing over multiple slots PUSCH and for PUCCH repetitions of PUCCH formats 1, 3, and 4;

- A UE can report the maximum duration (maxDMRS-BundlingDuration), in number of consecutive slots, during which the UE is able to maintain power consistency and phase continuity under certain tolerance level;

- With the duration of the nominal TDWs (time domain windows) not longer than the maximum duration, configured by gNB, one or multiple nominal TDWs can be determined for PUSCH transmissions or PUCCH repetitions;

- A nominal TDW consists of one or multiple actual TDWs. Events, which cause power consistency and phase continuity not to be maintained across PUSCH transmissions or PUCCH repetitions within the nominal TDW, are defined;

- An actual TDW is terminated in case an event occurs. A new actual TDW is created in response to semi-static events not triggered by DCI or MAC-CE. Whether a new actual TDW is created in response to dynamic events triggered by DCI is subject to UE capability;

- The UE shall maintain power consistency and phase continuity within an actual TDW across PUSCH transmissions or PUCCH repetitions.

In other words, one can say that the DM-RS bundling framework is an extension of the possibility for enhancing the coverage of UL transmissions. In previous releases it was possible to configure UEs to perform PUSCH repetitions (provided that UEs were capable of this), and hence allow the base station to capture the energy from the individual uplink transmissions to enhance the received SINR and hence obtain better detection reliability in poor channel conditions. In coverage enhancement configurations prior to R-17, each UL transmission of PUSCH would be confined within a single slot, which would be seen as independent from neighboring slots.

In the Rel-17 coverage enhancement work the main change that is implied is that there is a commitment from UE side to maintain phase continuity and power consistency between consecutive slots (within the so-called actual time domain window - aTDW), which would allow for the gNB to perform cross-slot processing. Such cross-slot processing would for instance be utilizing the reference signals (DM-RS) across slots to enhance the reliability of the channel estimate as well as combining the received signals for the actual PUSCH samples.

Non terrestrial networks

As part of the 3GPP Rel-17 work there was an addition of being able to support communication between satellites and UEs (roughly speaking). Under this work the main focus was on enabling the communication that would make the system work, even that satellites are moving at high speeds (7500 m/s at low earth orbit) and potentially having extremely long round trip times (due to satellites being at 36000 km altitude for geostationary/geosynchronous orbits, which causes a round trip time of ~0.5 seconds). For the Rel-17 work, the general assumption was that the satellites used for the communication would be operating in "transparent mode", meaning that the satellites would be seen as mobile remote radio heads, while the normal 5G base station would be located on earth. For this scenario the communication link between the gNB and the UE would be divided into two radio links; The feeder link (between the gNB and the satellite) and the service link (between the satellite and the UE). One of the main challenges in the communication using NTN is that satellites in LEO are moving at high velocity, thereby causing the path distance for both the feeder link and the service link to change as a function of time. To solve this problem, it is assumed that the UE is equipped with a functionality that can provide the UE its geo-location (through GNSS - Global Navigation Satellite System - GPS, GloNass, Gallileo as examples of such systems). By the UE knowing its own location, and subsequently providing the satellite's position in space it is possible for the UE to calculate or estimate the impairments that are experienced for the service link (estimation of path length can be converted into a time delay and knowing the satellite's velocity and direction can allow the UE to calculate and compensate the experienced Doppler shift from satellite (and UE) movement). For the feeder link the gNB will in a similar way provide information that is descriptive of the time-variation. Such information is known as Common TA related parameters, and will be used by the UE to perform additional pre-compensation of the impairments that are seen on the feeder link (the gNB or the satellite subsystem is expected to compensate for the Doppler offset that is experienced on the feeder link). Since the satellite location information (serving satellite ephemeris information) is dynamic in nature, this information is further provided with two parameters:

- Epoch time: The definition of the time by which the information is to be seen as "valid". This is important due to the high velocity of the LEO satellite, and it is crucial that there is an exact understanding at the UE side of the satellite's position at a given time; and

- Validity timer: An indication from the gNB side which tells the UE for how long after the Epoch time the UE may see the provided ephemeris information of the satellite to be applicable. This is needed to ensure that the LTE is not using information that is outside of the "prediction horizon", which would especially happen for the common TA related parameters which essentially just represents a second order polynomial approximation of the Feeder link's time delay.

As similarly stated above, DM-RS bundling is a technique that can jointly be exploited with PUSCH repetitions to help improving the performance of channel estimation algorithms at gNB and provide performance gain. However, to be able to realize the promised performance gain of DM-RS bundling, several conditions need to be met first. The two most important criterions are power consistency and phase continuity.

To ensure power consistency and phase continuity, 5G NR specifications set some requirements with respect to the maximum allowable phase difference across DM-RS symbols, see e.g. Table 6.4.2.5-1 in TS 38.101. Furthermore, as part of Rel17 "coverage enhancement" work item, a DM-RS bundling framework is developed. The main objective of DM-RS bundling framework is to ensure that gNB and UE have the same understanding of the number of slots, wherein DM-RS bundling is applied. This is typically achieved via gNB configuration of the nominal TDW (nTDW) and actual TDW (aTDW) at LTE for application of DM-RS bundling. As stated briefly in the beginning of this section, several events are identified and listed in 5G NR specification, as part of DM-RS bundling framework, that occurrence of any of these events leads to the scenario wherein UE cannot maintain phase continuity and power consistency. One of such events occurs when UE updates the timing advance (TA) of its UL transmissions.

Both gNB and UE are aware of the occurrence of the events therefore both have the same understanding of the number DM-RS bundled slots.

In NTN, the TA (timing advance) consists of two main parts namely UE specific TA and common TA. UE specific TA accounts for the delay of the service link, i.e., the delay between the satellite and the UE. UE specific TA is acquired autonomously by UE based on the provided satellite ephemeris information broadcast and UE estimate of the distance between UE and satellite via GNSS. On the other hand, common TA accounts for the delay of the feeder link (i.e., the delay between the satellite and the gNB) and it is provided to UE by the gNB by providing parameters for a $2^{nd}$ order polynomial description of the Common TA. As a result, updating either of these components leads to an update of the final value of TA. Currently there is no definition in the specification as to exactly when the UE should update and apply the calculated values of the TA components belonging to the operation of NR over NTN.

It can be observed that in NTN, due to the autonomous update of UE specific TA, and given that gNB is not aware of the UE updates, the common understanding regarding the number/size of DM-RS bundled slots does not exist anymore and this will affect the performance of channel estimation algorithms at gNB.

To resolve this issue, i.e., to ensure such an understanding, one idea is that gNB and UE exchange some information related to the time/frequency compensation update that assist both sides acquire this common understanding again.

For NTN-specific PUSCH DMRS bundling, it is further discussed whether nominal/actual TDW determination defined in standards can be reused for NTN or not, e.g., the following options:

- Option 1: Actual TDW determination based on timing of TA pre-compensation update causing phase discontinuity and power inconsistency. UE determines the timing:

  ◦ Nominal TDW is configured by gNB as in the existing spec;
  ◦ UE reports information on the timing.
  ◦ Actual TDW is determined by the reported information and events; and a new event is defined based on TA pre-compensation update.

- Option 2: Nominal/actual TDW determination based on gNB configuration and/or indication:

  ◦ Option 2-1: Determined as in the existing spec. No specification change is assumed. Nominal TDW is configured by gNB as in the existing spec. Note: Based on gNB implementation, nominal TDW length can be configured to current timing or time drift, derived from satellite ephemeris, to allow UE to update time/frequency pre-compensation sufficiently often. Actual TDW is determined by events defined in standards. Note: no new event is defined for the TA pre-compensation update.

  ◦ Option 2-2: Determined by new gNB configuration/indication. E.g. TA pre-compensation timing is indicated by gNB. E.g. Further segmented configuration is provided by gNB.

One difference between Option 1 and Option 2 is that in Option 1 UE sends the information (in this case report on the timing updates) to gNB, whereas in Option 2 in general gNB provides the UE with (new) configuration and/or indication.

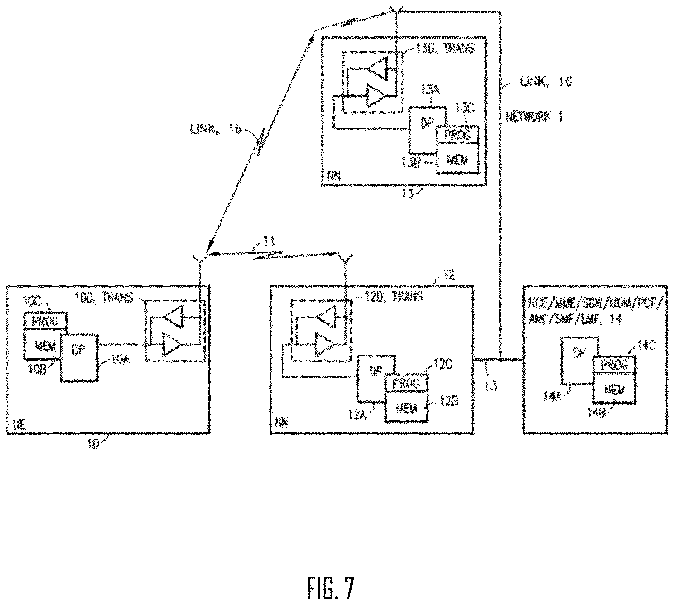

Before describing the example embodiments as disclosed herein in detail, reference is made to FIG. 7 for illustrating a simplified block diagram of various electronic devices that are suitable for use in practicing the example embodiments of this invention.

FIG. 7 shows a block diagram of one possible and non-limiting exemplary system in which the example embodiments may be practiced. In FIG. 7, a user equipment (UE) 10 is in wireless communication with a wireless network 1 or network, 1 as in FIG. 7. The wireless network 1 or network 1 as in FIG. 7 can comprise a communication network such as a mobile network e.g., the mobile network 1 or first mobile network as disclosed herein. Any reference herein to a wireless network 1 as in FIG. 7 can be seen as a reference to any wireless network as disclosed herein. Further, the wireless network 1 as in FIG. 7 can also comprises hardwired features as may be required by a communication network. A UE is a wireless, typically mobile device that can access a wireless network. The UE, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 10 includes one or more processors DP 10A, one or more memories MEM 10B, and one or more transceivers TRANS 10D interconnected through one or more buses. Each of the one or more transceivers TRANS 10D includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers TRANS 10D which can be optionally connected to one or more antennas for communication to NN 12 and NN 13, respectively. The one or more memories MEM 10B include computer program code PROG 10C. The UE 10 communicates with NN 12 and/or NN 13 via a wireless link 11 or 16.

The NN 12 (NR/5G Node B, an evolved NB, base station or LTE device) is a network node such as a master or slave, primary or secondary node base station (e.g., for NR or LTE long term evolution) that communicates with devices such as NN 13 and UE 10 of FIG. 7. The NN 12 provides access to wireless devices such as the UE 10 to the wireless network 1. The NN 12 includes one or more processors DP 12A, one or more memories MEM 12B, and one or more transceivers TRANS 12D interconnected through one or more buses. In accordance with the example embodiments these TRANS 12D can include X2 and/or Xn interfaces for use to perform the example embodiments. Each of the one or more transceivers TRANS 12D includes a receiver and a transmitter. The one or more transceivers TRANS 12D can be optionally connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13 such as via link 16. Further, the link 11, link 16 and/or any other link may be wired or wireless or both and may implement, e.g., an X2 or Xn interface. Further the link 11 and/or link 16 may be through other network devices such as, but not limited to an NCE/MME/SGW/UDM/PCF/AMF/SMF/LMF 14 device as in FIG. 7. The NN 12 may perform functionalities of an MME (Mobility Management Entity) or SGW (Serving Gateway), such as a User Plane Functionality, and/or an Access Management functionality for LTE and similar functionality for 5G.

The NN 13 can be for WiFi or Bluetooth or other wireless device associated with a mobility function device such as an AMF or SMF, further the NN 13 may comprise a NR/5G Node B or possibly an evolved NB a base station such as a master or slave, primary or secondary node base station (e.g., for NR or LTE long term evolution) that communicates with devices such as the NN 12 and/or UE 10 and/or the wireless network 1. The NN 13 includes one or more processors DP 13A, one or more memories MEM 13B, one or more network interfaces, and one or more transceivers TRANS 13D interconnected through one or more buses. In accordance with the example embodiments these network interfaces of NN 13 can include X2 and/or Xn interfaces for use to perform the example embodiments. Each of the one or more transceivers TRANS 13D includes a receiver and a transmitter that can optionally be connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., link 11 or link 16 or another link. The Link 16 as shown in FIG. 7 can be used for communication with the NN12. These links maybe wired or wireless or both and may implement, e.g., an X2 or Xn interface. Further, as stated above the link 11 and/or link 16 may be through other network devices such as, but not limited to an NCE/MME/SGW device such as the NCE/MME/SGW/UDM/PCF/AMF/SMF/LMF 14 of FIG. 7.

The one or more buses of the device of FIG. 7 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH), with the other elements of the NN 12 being physically in a different location from the RRH, and these devices can include one or more buses that could be implemented in part as fiber optic cable to connect the other elements of the NN 12 to a RRH.

It is noted that although FIG. 7 shows a network nodes such as NN 12 and NN 13, any of these nodes may incorporate or be incorporated into an eNodeB or eNB or gNB such as for LTE and NR, or to any other similar base station, and would still be configurable to perform example embodiments.

Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The wireless network 1 or any network it can represent may or may not include a NCE/MME/SGW/UDM/PCF/AMF/SMF/LMF 14 that may include (NCE) network control element functionality, MME (Mobility Management Entity)/SGW (Serving Gateway) functionality, and/or serving gateway (SGW), and/or MME (Mobility Management Entity) and/or SGW (Serving Gateway) functionality, and/or user data management functionality (UDM), and/or PCF (Policy Control) functionality, and/or Access and Mobility Management Function (AMF) functionality, and/or Session Management (SMF) functionality, and/or Location Management Function (LMF), and/or Authentication Server (AUSF) functionality and which provides connectivity with a further network, such as a telephone network and/or a data communications network (e.g., the Internet), and which is configured to perform any 5G and/or NR operations in addition to or instead of other standard operations at the time of this application. The NCE/MME/SGW/UDM/PCF/AMF/SMF/LMF 14 is configurable to perform operations in accordance with example embodiments in any of an LTE, NR, 5G and/or any standards based communication technologies being performed or discussed at the time of this application. In addition, it is noted that the operations in accordance with example embodiments, as performed by the NN 12 and/or NN 13, may also be performed at the NCE/MME/SGW/UDM/PCF/AMF/SMF/LMF 14.

The NCE/MME/SGW/UDM/PCF/AMF/SMF/LMF 14 includes one or more processors DP 14A, one or more memories MEM 14B, and one or more network interfaces (N/W I/F(s)), interconnected through one or more buses coupled with the link 13 and/or link 16. In accordance with the example embodiments these network interfaces can include X2 and/or Xn interfaces for use to perform the example embodiments. The one or more memories MEM 14B include computer program code PROG 14C. The one or more memories MEM14B and the computer program code PROG 14C are configured to, with the one or more processors DP 14A, cause the NCE/MME/SGW/UDM/PCF/AMF/SMF/LMF 14 to perform one or more operations which may be needed to support the operations in accordance with the example embodiments.

It is noted that that the NN 12 and/or NN 13 and/or UE 10 can be configured (e.g. based on standards implementations etc.) to perform functionality of a Location Management Function (LMF). The LMF functionality may be embodied in any of these network devices or other devices associated with these devices. In addition, an LMF such as the LMF of the MME/SGW/UDM/PCF/AMF/SMF/LMF 14 of FIG. 7, as at least described below, can be co-located with UE 10 such as to be separate from the NN 12 and/or NN 13 of FIG. 7 for performing operations in accordance with example embodiments as disclosed herein.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10, DP12A, DP13A, and/or DP14A and memories MEM 10B, MEM 12B, MEM 13B, and/or MEM 14B, and also such virtualized entities create technical effects.

The computer readable memories MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 12B, MEM 13B, and MEM 14B may be means for performing storage functions. The processors DP10, DP12A, DP13A, and DP14A may be of any type suitable to the local technical environment, and may include one or more of general purpose computers, special purpose computers, microprocessors, digital signal processors (DSPs) and processors based on a multi-core processor architecture, as non-limiting examples. The processors DP10, DP12A, DP13A, and DP14A may be means for performing functions, such as controlling the UE 10, NN 12, NN 13, and other functions as described herein.

In general, various embodiments of any of these devices can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

In the following, each option presented above is briefly discussed

Option 2-1: as mentioned above, for this option, nTDW is configured according to the 5G NR specifications, and very importantly based on the current timing or time drift, derived from satellite ephemeris. Subsequently, aTDW is determined according to the current specifications. The rationale behind this option is that by choosing the length of nTDW appropriately, UE can perform time/frequency pre-compensation sufficiently often. Therefore, no new event is also needed to be introduced for UE specific TA update of a Rel-18 NTN UE compare with legacy Rel-17 NTN UE.

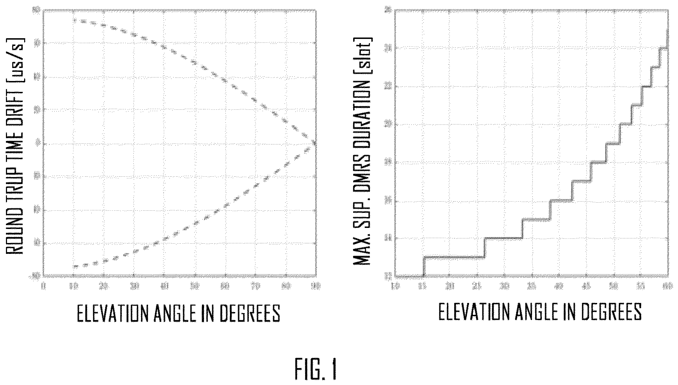

To better understand the limitations of this option and the impact of timing drift, in FIG. 1 there is a plotted timing drift (of LEO1200) as a function of elevation angle when satellite fly over the UE on the left, and the maximum supported duration of DM-RS bundling (before UE loses its UL synchronization due to the impact of timing drift) as a function of elevation angle on the right. It can be noticed that the maximum supported DMRS bundling duration (for a certain maximum timing drift within the duration) increases for larger elevation angles.

The maximum supported DM-RS bundle size can be used, e.g., for configuration of nTDW as it is envisioned in Option 2-1. However, in the current specifications, length of nTDW is configured via higher layer radio resource control (RRC) parameter "*PUSCH-TimeDomainWindowLength*". Therefore, associating the configuration of the length of nTDW to the current timing drift requires huge RRC signaling, which may not be a very practical solution.

Option 2-2: in this option, nTDW and aTDW can be determined based on new gNB configuration. For instance, gNB can provide/instruct the UE with instances of the time for performing TA update(s). Given that both gNB and UE are aware of TA update instance(s), then no ambiguity remains regarding nTDW and aTDW determination. TA update is an event which may stop the current aTDW.

The understanding behind option 2-2 is that, in general, it is an enabler of the "segmented UL transmission" concept in IoT NTN Rel-17. There, for transmission of NPUSCH repetitions, a certain time window, called UL segment, is configured, wherein IoT NTN UE must withhold its TA update for uplink transmissions. Therefore, IoT NTN UE is only allowed to perform TA updates outside each UL segment. Additionally, IoT NTN UE may also indicate its capability with respect to minimum supported gaps between UL segments. Now, with option 2-2, one design strategy would be to choose the length of nTDW equal to the length of UL segment.

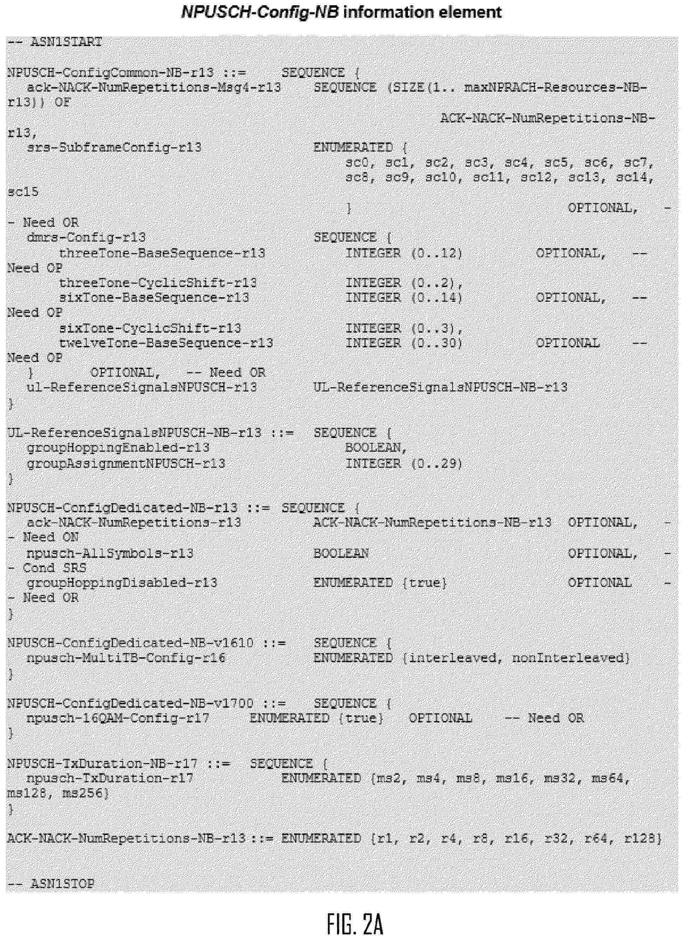

In the specification, "*NPUSCH-Config-NB*" information element provides the relevant information for the length of UL segment via the parameter "*NPUSCH-TxDuration-NB-r17*", see FIG. 2A.

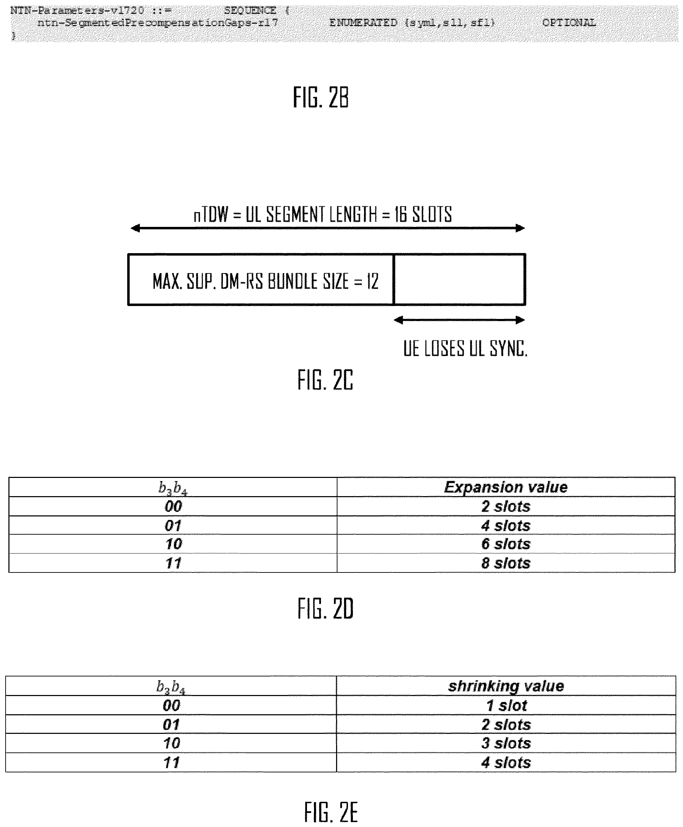

Also, "UE-EUTRA-Capability" information element is used to send "*ntn-SegmentedPrecompensationGaps-rl7*", see FIG. 2B.

One can observe that, if the concept of UL segment transmission is adopted, the most relevant range of values from parameter "*NPUSCH-TxDuration-NB-r17*" are ms16 and ms32, i.e., segments with duration of 16 and 32 slots. Therefore, length of nTDW can be configured such that it is smaller than or equal to the size of UL segment. Now, taking the impact of timing drift into account, see FIG. 1, NTN UE in the coverage shortage, e.g., UE at elevation angle of 10°, can only support DM-RS bundle size of 12 slots and cannot withholds its TA update for 16 or 32 slots. Therefore, further segmentation of "*NPUSCH-TxDuration-NB-r17*" is needed to support DM-RS bundling for NTN UE in Rel-18.

Note that for option 2-2, nTDW is shielded by UL segment window, and in principle nTDW can be a floating window within UL segment window. The main purpose of UL segment window is to mandate the UE to withhold its TA update. However, this UL segment window cannot be chosen too large as it will increase the likelihood of UE loses its UL synchronization, as shown in Figure 2C. Also, it cannot be smaller than nTDW window so that UE performs UE autonomous TA update outside UL segment window and within nTDW window, condition on that UE autonomous TA update is considered as an event that breaks phase continuity and power consistency.

In accordance with example embodiments there is proposed solutions aiming to resolve the limitation/issues identified with both option 2-1 and option 2-2. In particular, proposed solutions may reduce the RRC signalling overhead incurred in option 2-1 such that nTDW can be more dynamically configured based on the current timing drift experienced by a UE, as it is envisioned in option 2-1. Moreover, proposed solutions for option 2-2 provides new NTN specific configurations.

Some example embodiments are proposed where the network sends an indication of a base time window to a UE as well as sends adjustment value for adjusting the base time window. In some examples the base time window is (higher layer (e.g. RRC) signalled while the adjustment value is signalled with lower layers (such as MAC). This may allow for a quick option to change the base time window. The adjusted time domain window then serves as a time window during which a predetermined at least one radio characteristic remains within predetermined limits.

During this time window, coverage enhancement procedure, such as PUSCH repetition like DM-RS bundling, may be performed without changing e.g. timing advance related transmission parameters of the repetition transmission. For example, the at least one radio characteristic that remains stable (or within the predetermined limits) during the adjusted time window may be one or more of timing advance used for the transmissions, phase used for the transmissions or Tx power used for the transmissions. As such, during the adjusted time window it can be assumed that the timing advance (TA) remains stable, or that the phase and Tx power may be kept the same. The predetermined limits may be determined based on empirical testing such that if the TA/phase/power changes only within the limits, the reception of the transmitted signal is not impaired.

Alternatively, the limits may be preconfigured and known by both parties. As one example, the limit for the TA is that no TA update is allowed to be performed during this adjusted time window. For power, the limit may be that there cannot be any power level difference across DM-RS symbols (as an example PUSCH repetition signal). For phase, the limits may be defined based on specification, wherein maximum allowable phase difference across DM-RS symbols is set.

There are provided methods for dynamic determination of UE TA update(s) for DM-RS bundling framework, wherein ("network-assisted" configuration of) nTDW and/or TA update rate or periodicity and/or UL segment length/duration/window is adjusted/indicated taking NTN specifics into accounts.

In one embodiment (embodiment a), nTDW length is determined at UE as follows:

$$T_{\mathrm{nTDW}} = T_{\mathrm{nTDW}}^{\mathrm{Base}} + T_{\mathrm{nTDW}}^{\mathrm{Expansion}},$$

wherein the base value, $T_{\mathrm{nTDW}}^{\mathrm{Base}}$, is configured as in the current specifications via RRC parameter "*PUSCH-TimeDomainWindowLength*" and signaled only once. This may correspond to signaling the base time window. The base time window may a nominal time window. The expansion value (corresponding to signaling the adjustment value) can be indicated by higher or lower layer, e.g., lower layers L1 or L2, signaling. Here, the expansion value takes the current timing drift due to the movement of satellite into account.

    i. One example implementation of this embodiment would be to choose the base value ($T_{\mathrm{nTDW}}^{\mathrm{Base}}$) as the possible bundle size for NTN UE at minimum elevation angle, 10°, e.g., based on FIG. 1 for LEO1200 this is 12 slots. Then, the expansion value (e.g., 2/4/6/8 slots) is indicated via DCI or MAC-CE to the UE depending on the current timing drift obtained from satellite ephemeris at gNB. The UE may then adjust the length of the base time window based on the adjustment value.

    ii. An example implementation of the indication of the expansion value via L1 can be based on re-purposing of some of the fields in DCI (e.g. DCI 0_1), which is scheduling PUSCH transmission with repetitions, e.g., re-purposing of MCS field, or to use the reserved bits of the fields, e.g., using the reserved bits of "Antenna Port" field;

iii. In another implementation, a new field in DCI 0_1 is introduced to indicate the expansion value, but still limited to usage under NR over NTN;

iv. In another implementation, a new field in DL MAC-CE is introduced to indicate the expansion value to the UE

One advantage of this embodiment is that it avoids several RRC re-configurations, while being able to adapt/configure nTDW length based on the current timing drift. Through the L1/L2 mechanisms there will be a verification mechanism in place such that the gNB is aware of the UE receiving the adjustment indication (and in case a UE misses one adjustment, the gNB may provide the offset (i.e. adjustment value) once more since it is relative to the base value).

In another embodiment (embodiment b), nTDW/aTDW is configured according to current specifications (specs). However, to ensure that UE sufficiently enough updates its TA, gNB indicates the rate or periodicity of TA updates to UE instead of indicating TA update instances. The rate or periodicity of the TA update indication may be seen as indication of the adjustment value as rate or periodicity of the TA update comprises a value for adjusting the base time advance update rate or periodicity.

v. In this case, a starting slot and a rate or periodicity are determined by the UE based either on a gNB configuration or on specification text, so that UE updates its TA based on the determined rate or periodicity;

vi. In the case the UE determines the starting slot from specification text, in one embodiment the starting slot is the slot where a set of PUSCH repetitions starts;

vii. In the case the UE determines the starting slot from gNB configuration, in one embodiment the starting slot is the configured one;

viii. In one embodiment the configured or specified rate or periodicity is changed dynamically from gNB via L1/L2 signalling to adjust it to the current timing drift experienced by the UE;

ix. In one example implementation, if $P_{TA}$ is called the rate/periodicity of TA update, $P_{TA}$ is dynamically indicated via L1/L2 to UE;

x. In one example implementation, if $P_{TA}$ is called the rate/periodicity of TA update, $P_{TA}$ is derived by the UE as

$$P_{TA} = P_{TA}^{\text{Base}} + P_{TA}^{\text{Expansion}}$$, wherein $P_{TA}^{\text{Base}}$ is RRC configured (as information indicating base time window)

and $P_{TA}^{\text{Expansion}}$ is dynamically indicated to UE via L1/L2 signalling as the adjustment value;

xi. In this case, the nTDW is configured once via RRC and it is not adjusted dynamically. The TA periodic updates will create events within an nTDW, causing the nTDW to be split into multiple aTDWs serving as the adjusted time window. Within each aTDW UE keeps phase and/or power consistency by not updating the TA.

In another embodiment (embodiment c), UL segment length is adjusted/indicated taking NTN specifics into accounts. In particular, UL segment length/duration/window is configured by the network as follows:

$$T_{\text{UL-Segment}} = T_{\text{UL-Segment}}^{\text{Base}} - T_{\text{UL-Segment}}^{\text{Shrinking}},$$

wherein the base value, $T_{\text{UL-Segment}}^{\text{Base}}$, is configured as in the current specifications via RRC parameter "*NPUSCH-TxDuration-NB-r17*" and signaled only once. This can be seen as the base time window. The shrinking value, i.e. the adjustment value, can be indicated by higher or lower layer, e.g., lower layer 1, signaling. T*he base UL segment is information that is in useable for defining the base time window and the UL segment shrinking value is useable for adjusting the base UL segment and thus, the base time window.* Subsequently, the shrinking accounts for splitting of an UL segment further, that is it serves to shorten the base time window into an adjusted time window.

One example implementation of this embodiment would be to choose the base value as "*npusch-TxDuration-r17 = ms16*", i.e., 16 ms. Subsequently, the shrinking value can be indicated to UE from the set of values, e.g., (1/2/3/4).

Therefore, the length of UL segment can be configured to take values in the range of (15/14/13/12) slots.

Note that in this embodiment, the same methodology as in embodiment a. can be adopted, from this perspective, that instead of reducing the size of a base value, expansion of the base value is considered.

In another embodiment, UL segment is indicated to UE taking NTN specifics into account, wherein the UL segment is configured by the network as follows:

$$T_{\text{UL-Segment}} = T_{\text{UL-Segment}}^{\text{Base}},$$

wherein $T_{\text{UL-Segment}}^{\text{Base}}$ is configured as in the current specification via RRC parameter "*NPUSCH-TxDuration-NB*", but with the modified range of parameter values;

One example implementation of this embodiment would be to choose the base value according to the following set "*npusch-TxDuration-r17*" - {ms2, ms4, ms6 ms8, ms12, ms14, ms16, ms18, ms20, ms32, ms64, ms128, ms256}, where new segment durations are underlined.

Further, in accordance with example embodiments the reference to the expanding value or expansion, shrinking value or shrinking, expansion rate/periodicity of TA update in this application may be referred to as an "adjustment value" or similar. For example, TA value update rate/periodicity is information to adjust the base time window by setting an event which eventually changes the base time window, and thus it can be seen as an example of an adjustment value for adjusting base time window.

In addition, any reference to a base value for nTDW, base UL segment/duration/size/window, or base rate/periodicity of TA update may be referred to as the base time window. For example, base UL segment indicates a time period (base time window) as well as base TA update rate indicates a rate during which TA should stay the same and thus is an indication of base time period.

Example 1 - [Embodiment a]:

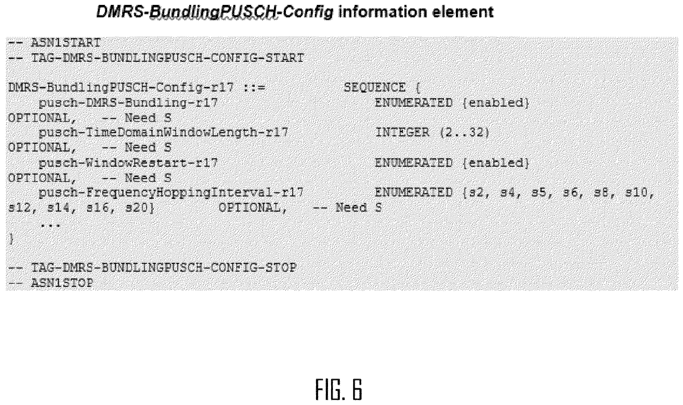

- Step 1: gNB configures via RRC signaling the DM-RS bundling parameters. Information element "*OMRS-Bundling-PUSCH-Config*" is shown in Figure 6 and can be used for this purpose. Here, "pusch-TimeDomainWindowLength-r17" can be used to set the base value for nTDW length according to embodiment a. Given that satellite with altitude of 1200 km is a working assumption in RAN1 for design of DM-RS bundling framework, as simulated in FIG. 1, maximum supported bundle size for an NTN UE at 10°elevation angle is 12 slots. Therefore, "pusch-TimeDomain-WindowLength-r17" can be chosen as 12;

- Step 2: UE acquires the base value for nTDW length (I.e. base time window) via "pusch- TimeDomain WindowLength-r 17";

- Step 3: gNB acquires the satellite ephemeris information. Therefore, being able to calculate the current timing drift and based on that the adjustment value;

- Step 4: gNB indicates the expansion value (i.e. the adjustment value) via re-purposing of MCS field bits in DCI 0_1. MCS field bit size is 5, and for UE in coverage shortage, most likely modulation schemes with lower modulation order needs to be adopted.

Therefore, as one implementation, 2 bits of the MCS field can be used to indicate the value of expansion from a set of 4 candidate values. In other words, denoting the MCS field bits by $b_0b_1b_2b_3b_4$, the first three bits ($b_0b_1b_2$) can be used for calculation of MCS index, and the last two bits ($b_3b_4$) can be used to indicate the value of expansion for nTDW, as an example according to the table as shown in FIG. 2D.

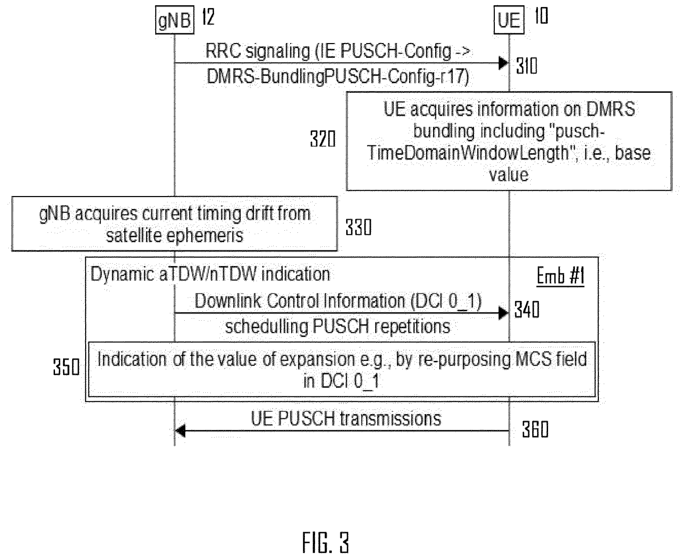

FIG. 3 shows a flow chart of an Example "1" Embodiment "a" in accordance with example embodiments of the invention. FIG. 3 shows an 310 RRC signaling (IE PUSCH-Config -> DMRS-BundlingPUSCH-Config-r17) from the gNB 12 towards a UE 10, such as in FIG. 7. As shown in step 320 of FIG. 3 the UE acquires information on DMRS bundling including "pusch-TimeDomainWindowLength", i.e., base value. As shown in step 330 of FIG. 3 the gNB 12 acquires current timing drift from satellite ephemeris. As shown in step 340 of FIG. 3 there is in accordance with example embodiments of the invention a Dynamic nTDW indication Downlink Control Information (DCI 0_1) scheduling PUSCH repetitions is communicated from the gNB 12 towards the UE 10. As shown in step 350 of FIG. 3 the communication includes an Indication of the value of expansion e.g., by re-purposing MCS field in DCI 0_1.

Then as shown in step 360 of FIG. 3 there is sending by the UE 10 towards the gNB 12 UE PUSCH Transmissions.

Example 2 - [Embodiment b]:

- Step 1: gNB configures via RRC signaling the DM-RS bundling parameters. Here, "pusch-TimeDomainWindowLength-r17" can be used to configure the duration of nTDW. In an embodiment this can be seen as indication of the base time window. For instance for VoIP with 20 ms duration and 15 kHz SCS, , "pusch-TimeDomainWindowLength-r17" can be set to 20 slots;

- Step 2: UE acquires DM-RS bundling related information;

- Step 3: gNB configures the base value of the rate/periodicity of TA update via RRC signaling. For instance, the $P_{TA}^{\text{Base}}$ , can be set to the value of 12 slots;. In an embodiment this can be seen as indication of the base time window because this *base TA update rate/periodicity indicates a time window during which TA should stay the same and thus is an indication of base time window.*

- Step 4: gNB dynamically indicates the adjustment of the rate/periodicity of TA update to UE, according to the current timing drift, for instance this can be provided via L1, DCI, signaling and be set to 2 slots. There is reference to this value as $P_{TA}^{\text{Expansion}}$ in the following. This expansion value is an example of adjustment value;

- Step 5: UE acquires the full TA update rate and/or periodicity by summing up the configured $P_{TA}^{\text{Base}}$ and the dynamically indicated adjustment ($P_{TA}^{\text{Expansion}}$) in Step 4, and will break the first aTDW by updating its TA in slot number 14 ($P_{TA}^{\text{Base}} + P_{TA}^{\text{Expansion}} = 14$) within 20 ms (slot) nTDW window, and subsequently according to current specification create another aTDW (I.e. adjusted time window) within the 20ms nTDW between the 14th and the last slot (if no other events occur);

- Step 6: gNB is aware of the time that UE updates its TA. Therefore no ambiguity remains with respect to the alignment of aTDWs

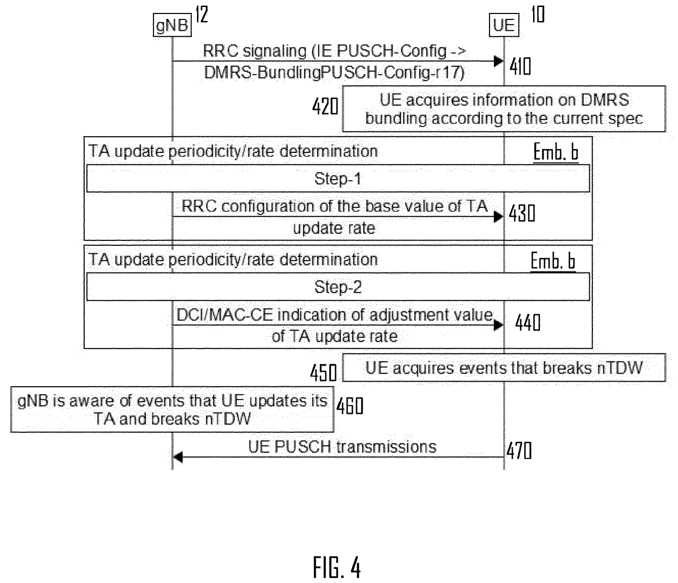

FIG. 4 shows a flow chart of an Example "2" Embodiment "b" in accordance with example embodiments of the invention. FIG. 4 shows an 410 RRC signaling (IE PUSCH-Config -> DMRS-BundlingPUSCH-Config-r17) from the gNB 12 towards a UE 10, such as in FIG. 7. As shown in step 420 of FIG. 4 the UE acquires information on DMRS bundling according to current specification. In this application DM-RS and DMRS are used interchangeably. As shown in step 430 of FIG. 4 there is a TA update periodicity/rate determination before a step 1 where an RRC configuration of the base value of TA update rate is communicated from the gNB 12 towards the UE 10. As shown in step 440 of FIG. 4 there is a TA update periodicity/rate determination before a step 2 where a DCI/MAC-CE indication of adjustment value of TA update rate is communicated to the UE 10 from the gNB 12. As shown in step 450 of FIG. 4 the UE 10 acquires events that breaks nTDW into aTDW(s). As shown in step 460 of FIG. 4 the gNB 12 is aware of events that UE 10 updates its TA and breaks or skips nTDW. Then as shown in step 470 of FIG. 4 the UE 10 sends towards the gNB 12 UE PUSCH transmissions, possible in a repeated manner to enhance coverage.

Example 3 - [Embodiment c]:

- Step 1: gNB configures via RRC signaling the DM-RS bundling parameters and UL segment duration such as a base uplink segment duration. In an embodiment, this is an example of the base time window. Information element "*DMRS-BundlingPUSCH-Config*" is used to configure nTDW length. Furthermore, UL segment duration base value is configured via "*NPUSCH Config-NB*" information element". In an embodiment, this is an example of the base time window;

- Step 2: UE acquires the nTDW length via "*pusch-TimeDomainWindowLength-r17*", and the base value of UL segment length via "*npusch-TxDuration-r17*". Please note that here, "*pusch-TimeDomainWindowLength-r17*" must be chosen smaller than or equal to the value of "*npusch-TxDuration-r17*";

- Step 3: gNB acquires the satellite ephemeris information. Therefore, being able to calculate the current timing drift. This step is optional. However, to align the size of UL segment duration with maximum supported bundle size affected by current timing drift, acquiring this information is helpful. The network may use this info to determine the adjustment value, which in this example may be the shrinking value;

- Step 4: gNB indicates the shrinking value via re-purposing of e.g., MCS field bits in DCI 0_1. MCS field bit size is 5, and for UE in coverage shortage, most likely modulation schemes with lower modulation order needs to be adopted. Therefore, as one implementation, 2 bits of the MCS field can be used to indicate the value of expansion from a set of 4 candidate values. In other words, denoting the MCS field bits by $b_0b_1b_2b_3b_4$, the first three bits ($b_0b_1b_2$) can be used for calculation of MCS index, and the last two bits ($b_3b_4$) can be used to indicate the value of shrinking for UL segment duration or base uplink segment duration, as an example according to the table in FIG. 2E

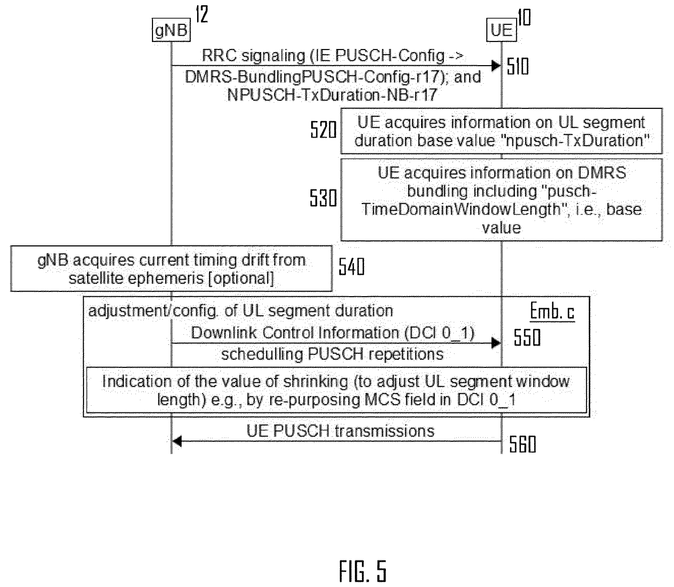

FIG. 5 shows a flow chart of an Example "3" Embodiment "c" in accordance with example embodiments of the invention. FIG. 5 shows an 510 RRC signaling (IE PUSCH-Config -> DMRS-BundlingPUSCH-Config-r17) from the gNB 12 towards a UE 10, such as in FIG. 7. As shown in step 520 of FIG. 5 the UE acquires information on UL segment duration base value "npusch-TxDuration". As shown in step 530 of FIG. 5 the UE 10 acquires information on DMRS bundling including "pusch-TimeDomainWindowLength", i.e., base value. As shown in step 540 of FIG. 5 the gNB 12 acquires current timing drift from satellite ephemeris [optional]. As shown in step 550 of FIG. 5 there is adjustment/config of UL segment duration by Downlink Control Information (DCI 1_0) scheduling PUSCH repetitions, and an indication of the value of shrinking or breaking (to adjust UL segment window length) e.g., by re-purposing MCS field in DCI 0_1. Then as shown in step 560 of FIG. 5 there is sending by the UE 10 towards the gNB 12 UE PUSCH transmissions, possibly in repetitive manner to enhance coverage.

Further, it is noted that in accordance with example embodiments of the invention the above examples may be defined in steps of the claims as presented below. In the application terms "time window" and "time domain window" can be used interchangeably. It is noted that the base time window as described above can be indicated by means of the nominal TDW, base UL segment, or base TA update rate/periodicity. In addition, a base UL segment may indicate a time period (base time window) as well as base TA update rate indicates a rate during which TA should stay the same and thus is an indication of base time period. Further, timing drift information may be used to derive expansion TDW value, shrinking UL segment, and/or TA periodicity update, which are all examples of an adjustment value.

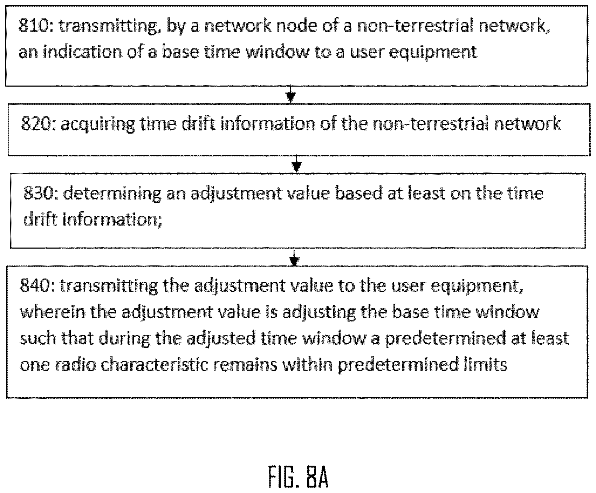

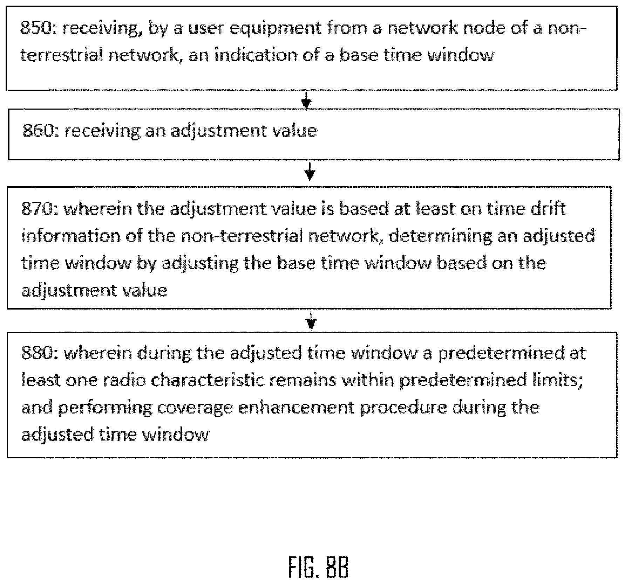

FIG. 8A and FIG. 8B each show a method in accordance with example embodiments of the invention which may be performed by an apparatus.

FIG. 8A illustrates operations which may be performed by a network device such as, but not limited to, a network node NN 12 or NN 13 as in FIG. 7 or an eNB or gNB. As shown in step 810 of FIG. 8A there is transmitting, by a network node of a non-terrestrial network, an indication of a base time window to a user equipment. As shown in step 820 of FIG. 8A there is acquiring timing drift information of the non-terrestrial network. As shown in step 830 of FIG. 8A there is determining an adjustment value based at least on the timing drift information. Then as shown in step 840 of FIG. 8A there is transmitting the adjustment value to the user equipment, wherein the adjustment value is for adjusting the base time window such that during the adjusted time window a predetermined at least one radio characteristic remains within predetermined limits.

In accordance with the example embodiments as described in the paragraph above, wherein the indication of the base time window comprises an indication of a nominal time domain window and the adjustment value comprises a value for adjusting the nominal time domain window.

In accordance with the example embodiments as described in the paragraphs above, wherein the indication of base time window comprises an indication of a base uplink segment and the adjustment value comprises a value for adjusting the base uplink segment.

In accordance with the example embodiments as described in the paragraphs above, wherein the indication of base time window comprises an indication of at least one of base time advance update rate or periodicity and the adjustment value comprises a value for adjusting at least one of the base time advance update rate or periodicity.

In accordance with the example embodiments as described in the paragraphs above, wherein the update rate or periodicity of the time advance is determined with respect to a starting slot.

In accordance with the example embodiments as described in the paragraphs above, wherein the starting slot is pre-defined or an indication of the starting slot is received from the network node, wherein the starting slot is the slot at which one of physical uplink shared channel repetitions begin or at least one coverage enhancement procedure is started at the user equipment.

In accordance with the example embodiments as described in the paragraphs above, wherein the predetermined at least one radio characteristic comprises at least one of the following for communication between the user equipment and the network node: timing advance, phase, and power.

In accordance with the example embodiments as described in the paragraphs above, wherein the transmission of the indication of the base time window is performed over higher layer communication.

In accordance with the example embodiments as described in the paragraphs above, wherein transmitting the adjustment value is performed over lower layer communication.

A non-transitory computer-readable medium (MEM 12B and/or MEM 13B as in FIG. 8) storing program code (PROG 12C and/or PROG 13C as in FIG. 8), the program code executed by at least one processor (DP 12A and/or DP 13A as in FIG. 8) to perform the operations as at least described in the paragraphs above.

In accordance with an example embodiment of the invention as described above there is an apparatus comprising: means for is transmitting (one or more transceivers 12D and/or 13D; MEM 12B and/or MEM 13B; PROG 12C and/or PROG 13C; and DP 12A and/or DP 13A as in FIG. 7), by a network node (NN 12 and/or NN 13 as in FIG. 7) of a non-terrestrial network (NETWORK 1 as in FIG. 7), an indication of a base time window to a user equipment; means for acquiring (one or more transceivers 12D and/or 13D; MEM 12B and/or MEM 13B; PROG 12C and/or PROG 13C; and DP 12A and/or DP 13A as in FIG. 7) timing drift information of the non-terrestrial network; means for determining (one or more transceivers 12D and/or 13D; MEM 12B and/or MEM 13B; PROG 12C and/or PROG 13C; and DP 12A and/or DP 13A as in FIG. 7) an adjustment value based at least on the timing drift information; and means for transmitting (one or more transceivers 12D and/or 13D; MEM 12B and/or MEM 13B; PROG 12C and/or PROG 13C; and DP 12A and/or DP 13A as in FIG. 7) the adjustment value to the user equipment, wherein the adjustment value is for adjusting the base time window such that during the adjusted time window a predetermined at least one radio characteristic remains within predetermined limits.

In the example aspect of the invention according to the paragraph above, wherein at least the means for transmitting and determining comprises a non-transitory computer readable medium [MEM 12B and/or MEM 13B as in FIG. 7] encoded with a computer program [PROG 12C and/or PROG 13C as in FIG. 7] executable by at least one processor [DP 12A and/or DP 13A as in FIG. 7].

FIG. 8B illustrates operations which may be performed by a network device such as, but not limited to, a UE 10 as in FIG. 7 or a user equipment. As shown in step 850 of FIG. 8B there is receiving, by a user equipment for a network node of a non-terrestrial network, an indication of a base time window. As shown in step 860 of FIG. 8B there is receiving an adjustment value. As shown in step 870 of FIG. 8B wherein the adjustment value is based at least on timing drift information of the non-terrestrial network, determining an adjusted time window by adjusting the base time window based on the adjustment value. Then as shown in step 880 of FIG. 8B wherein during the adjusted time window a predetermined at least one radio characteristic remains within predetermined limits; and performing coverage enhancement procedure during the adjusted time window.

In accordance with the example embodiments as described in the paragraph above, wherein the indication of the base time window comprises an indication of a nominal time domain window and the adjustment value comprises a value for adjusting the nominal time domain window.

In accordance with the example embodiments as described in the paragraphs above, wherein the indication of base time window comprises an indication of a base uplink segment and the adjustment value comprises a value for adjusting the base uplink segment.

In accordance with the example embodiments as described in the paragraphs above, wherein the indication of base time window comprises an indication of at least one of base time advance update rate or periodicity and the adjustment value comprises a value for adjusting at least one of the base time advance update rate or periodicity.

In accordance with the example embodiments as described in the paragraphs above, wherein the update rate or periodicity of the time advance is determined with respect to a starting slot.

In accordance with the example embodiments as described in the paragraphs above, wherein the starting slot is pre-defined or an indication of the starting slot is received from the network node, wherein the starting slot is the slot at which one of physical uplink shared channel repetitions begin or at least one coverage enhancement procedure is started at the user equipment.

In accordance with the example embodiments as described in the paragraphs above, wherein the predetermined at least one radio characteristic comprises at least one of the following for communication between the user equipment and the network node: timing advance, phase, or power.

In accordance with the example embodiments as described in the paragraphs above, wherein receiving the indication of the base time window is performed over higher layer communication.

In accordance with the example embodiments as described in the paragraphs above, wherein receiving the adjustment value is performed over lower layer communication.

A non-transitory computer-readable medium (MEM 10B as in FIG. 8) storing program code (PROG 10C as in FIG. 8), the program code executed by at least one processor (DP 10A as in FIG. 8) to perform the operations as at least described in the paragraphs above.

In accordance with an example embodiment of the invention as described above there is an apparatus comprising: means for receiving (one or more transceivers 10D; MEM 10B; PROG 10C; and DP 10A as in FIG. 7), by a user equipment (UE 10 as in FIG. 7) from a network node (NN 12 and/or NN 13 as in FIG. 7) of a non-terrestrial network (), an indication of a base time window; means for receiving (one or more transceivers 10D; MEM 10B; PROG 10C; and DP 10A as in FIG. 7) an adjustment value; wherein the adjustment value is based at least on timing drift information from the non-terrestrial Network; wherein the adjustment value is adjusting (one or more transceivers 10D; MEM 10B; PROG 10C; and DP 10A as in FIG. 7) the base time window such that during the adjusted time window a predetermined at least one radio characteristic remains within predetermined limits.

In the example aspect of the invention according to the paragraph above, wherein at least the means for receiving and adjusting comprises a non-transitory computer readable medium [MEM 10B as in FIG. 7] encoded with a computer program [PROG 10C as in FIG. 7] executable by at least one processor [DP 10A as in FIG. 7].

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:

(a) hardware-only circuit implementations (such as implementations in only analog and/or digital circuitry);

(b) combinations of hardware circuits and software, such as (as applicable):

(i) a combination of analog and/or digital hardware circuit(s) with software/firmware; and

(ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and

(c) hardware circuit(s) and or processor(s), such as a microprocessor(s) or a portion of a microprocessor(s), that requires software (e.g., firmware) for operation, but the software may not be present when it is not needed for operation."

In accordance with example embodiments of the invention, there is adequate circuitry for performing at least novel operations in accordance with example embodiments of the invention as disclosed in this application, this ' circuitry" as may be used herein refers to at least the following:

(a) hardware-only circuit implementations (such as implementations in only analog and/or digital circuitry); and

(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and

(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several nonlimiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

**Claims**

1. An apparatus, comprising:

   at least one processor; and
   at least one non-transitory memory storing instructions, that when executed by the at least one processor, cause the apparatus at least to:
   transmit, by a network node of a non-terrestrial network, an indication of a base time window to a user equipment;

      acquire time drift information of the non-terrestrial network;
      determine an adjustment value at least based on the time drift information; and
      transmit the adjustment value to the user equipment, wherein the adjustment value is for adjusting the base time window such that during the adjusted time window a predetermined at least one radio characteristic remains within predetermined limits.

2. The apparatus of claim 1, wherein the indication of the base time window comprises an indication of a nominal time domain window and the adjustment value comprises a value for adjusting the nominal time domain window.

3. The apparatus of claim 1, wherein the indication of the base time window comprises an indication of a base uplink segment duration and the adjustment value comprises a value for adjusting the base uplink segment duration.

**4.** The apparatus of claim 1, wherein the indication of the base time window comprises an indication of at least one of base time advance update rate or periodicity and the adjustment value comprises a value for adjusting at least one of the base time advance update rate or periodicity.

**5.** The apparatus of claim 4, wherein the update rate or periodicity of the time advance is determined with respect to a starting slot, wherein the starting slot is pre-defined or an indication of the starting slot is transmitted from the network node.

**6.** The apparatus of claim 5, wherein the starting slot is the slot at which one of physical uplink shared channel repetitions begin or at least one coverage enhancement procedure is started at the user equipment.

**7.** The apparatus according to any one of claims 1 to 6, wherein the predetermined at least one radio characteristic comprises at least one of the following for communication between the user equipment and the network node: timing advance, phase, or power.

**8.** The apparatus according to any one of claims 1 to 7, wherein the transmission of the indication of the base time window is performed over higher layer communication.

**9.** The apparatus according to any one of claims 1 to 8, wherein transmitting the adjustment value is performed over lower layer communication.

**10.** An apparatus, comprising:

at least one processor; and
at least one non-transitory memory storing instructions, that when executed by the at least one processor, cause the apparatus at least to:
receive, by a user equipment from a network node of a non-terrestrial network, an indication of a base time window; and

receive an adjustment value, wherein the adjustment value is based at least on time drift information of the non-terrestrial network,
determine an adjusted time window by adjusting the base time window based on the adjustment value, wherein during the adjusted time window a predetermined at least one radio characteristic remains within predetermined limits; and
perform a coverage enhancement procedure during the adjusted time window.

**11.** The apparatus of claim 10, wherein at least one of the following:

the indication of the base time window comprises an indication of a nominal time domain window and the adjustment value comprises a value for adjusting the nominal time domain window,
the indication of the base time window comprises an indication of a base uplink segment duration and the adjustment value comprises a value for adjusting the base uplink segment duration, or
the indication of the base time window comprises an indication of at least one of base time advance update rate or periodicity and the adjustment value comprises a value for adjusting at least one of the base time advance update rate or periodicity.

**12.** The apparatus of claim 11, wherein the update rate or periodicity of the time advance is determined with respect to a starting slot, wherein the starting slot is pre-defined or an indication of the starting slot is received from the network node.

**13.** The apparatus of claim 12, wherein the starting slot is the slot at which one of physical uplink shared channel repetitions begin or at least one coverage enhancement procedure is started at the user equipment.

**14.** The apparatus according to any of claims 10 to 13, wherein receiving the indication of the base time window is performed over higher layer communication.

**15.** The apparatus according to any of claims 10 to 14, wherein receiving the adjustment value is performed over lower layer communication.

FIG. 1

## *NPUSCH-Config-NB* information element

```
-- ASN1START

NPUSCH-ConfigCommon-NB-r13 ::=      SEQUENCE {
   ack-NACK-NumRepetitions-Msg4-r13      SEQUENCE (SIZE(1.. maxNPRACH-Resources-NB-
r13)) OF
                                                ACK-NACK-NumRepetitions-NB-
r13,
   srs-SubframeConfig-r13               ENUMERATED {
                                          sc0, sc1, sc2, sc3, sc4, sc5, sc6, sc7,
                                          sc8, sc9, sc10, sc11, sc12, sc13, sc14,
sc15
                                        }                        OPTIONAL,   -
- Need OR
   dmrs-Config-r13                     SEQUENCE {
      threeTone-BaseSequence-r13          INTEGER (0..12)        OPTIONAL,   --
Need OP
      threeTone-CyclicShift-r13           INTEGER (0..2),
      sixTone-BaseSequence-r13            INTEGER (0..14)        OPTIONAL,   --
Need OP
      sixTone-CyclicShift-r13             INTEGER (0..3),
      twelveTone-BaseSequence-r13         INTEGER (0..30)        OPTIONAL    --
Need OP
   }        OPTIONAL,    -- Need OR
   ul-ReferenceSignalsNPUSCH-r13       UL-ReferenceSignalsNPUSCH-NB-r13
}

UL-ReferenceSignalsNPUSCH-NB-r13 ::=  SEQUENCE {
   groupHoppingEnabled-r13                BOOLEAN,
   groupAssignmentNPUSCH-r13             INTEGER (0..29)
}

NPUSCH-ConfigDedicated-NB-r13 ::= SEQUENCE {
   ack-NACK-NumRepetitions-r13         ACK-NACK-NumRepetitions-NB-r13  OPTIONAL,  -
- Need ON
   npusch-AllSymbols-r13               BOOLEAN                         OPTIONAL,  -
- Cond SRS
   groupHoppingDisabled-r13            ENUMERATED {true}               OPTIONAL   -
- Need OR
}

NPUSCH-ConfigDedicated-NB-v1610 ::=   SEQUENCE {
   npusch-MultiTB-Config-r16             ENUMERATED {interleaved, nonInterleaved}
}

NPUSCH-ConfigDedicated-NB-v1700 ::=   SEQUENCE {
   npusch-16QAM-Config-r17    ENUMERATED {true}   OPTIONAL    -- Need OR
}

NPUSCH-TxDuration-NB-r17 ::=   SEQUENCE {
   npusch-TxDuration-r17                ENUMERATED {ms2, ms4, ms8, ms16, ms32, ms64,
ms128, ms256}
}

ACK-NACK-NumRepetitions-NB-r13 ::= ENUMERATED {r1, r2, r4, r8, r16, r32, r64, r128}


-- ASN1STOP
```

## FIG. 2A

```
NTN-Parameters-v1720 ::=          SEQUENCE {
   ntn-SegmentedPrecompensationGaps-r17       ENUMERATED {sym1,sl1,sf1}       OPTIONAL
}
```

FIG. 2B

nTDW = UL SEGMENT LENGTH = 16 SLOTS

MAX. SUP. DM-RS BUNDLE SIZE = 12

UE LOSES UL SYNC.

FIG. 2C

| $b_3b_4$ | Expansion value |
|---|---|
| 00 | 2 slots |
| 01 | 4 slots |
| 10 | 6 slots |
| 11 | 8 slots |

FIG. 2D

| $b_3b_4$ | shrinking value |
|---|---|
| 00 | 1 slot |
| 01 | 2 slots |
| 10 | 3 slots |
| 11 | 4 slots |

FIG. 2E

gNB 12                                                              UE 10

RRC signaling (IE PUSCH-Config ->
DMRS-BundlingPUSCH-Config-r17)                        ▶ 310

                                    ┌─────────────────────────────┐
                                    │  UE acquires information on DMRS  │
                              320   │  bundling including "pusch-       │
                                    │  TimeDomainWindowLength", i.e., base │
                                    │              value                │
                                    └─────────────────────────────┘

┌──────────────────────────────────┐
│  gNB acquires current timing drift from │      330
│         satellite ephemeris             │
└──────────────────────────────────┘

┌───────────────────────────────────────────────────────────┐
│  Dynamic aTDW/nTDW indication                    Emb #1      │
│                                                             │
│     Downlink Control Information (DCI 0_1)      ▶ 340        │
│         schedulling PUSCH repetitions                       │
│  ┌───────────────────────────────────────────────────────┐│
│  │ Indication of the value of expansion e.g., by re-purposing MCS field ││
│  │              in DCI 0_1                                ││
│  └───────────────────────────────────────────────────────┘│
└───────────────────────────────────────────────────────────┘
     350

              UE PUSCH transmissions                    360
◀

FIG. 3

**FIG. 4**

EP 4 443 766 A1

**gNB** 12                                                    **UE** 10

RRC signaling (IE PUSCH-Config ->
DMRS-BundlingPUSCH-Config-r17); and          510
NPUSCH-TxDuration-NB-r17

520 | UE acquires information on UL segment
duration base value "npusch-TxDuration"

530 | UE acquires information on DMRS
bundling including "pusch-
TimeDomainWindowLength", i.e., base
value

gNB acquires current timing drift from       540
satellite ephemeris [optional]

adjustment/config. of UL segment duration          **Emb. c**
Downlink Control Information (DCI 0_1)         550
schedulling PUSCH repetitions

Indication of the value of shrinking (to adjust UL segment window
length) e.g., by re-purposing MCS field in DCI 0_1

UE PUSCH transmissions
560

FIG. 5

24

EP 4 443 766 A1

**DMRS-BundlingPUSCH-Config information element**

```
-- ASN1START
-- TAG-DMRS-BUNDLINGPUSCH-CONFIG-START

DMRS-BundlingPUSCH-Config-r17 ::=          SEQUENCE {
    pusch-DMRS-Bundling-r17                    ENUMERATED {enabled}
OPTIONAL,    -- Need S
    pusch-TimeDomainWindowLength-r17           INTEGER (2..32)
OPTIONAL,    -- Need S
    pusch-WindowRestart-r17                    ENUMERATED {enabled}
OPTIONAL,    -- Need S
    pusch-FrequencyHoppingInterval-r17         ENUMERATED {s2, s4, s5, s6, s8, s10,
s12, s14, s16, s20}         OPTIONAL,   -- Need S
    ...
}

-- TAG-DMRS-BUNDLINGPUSCH-CONFIG-STOP
-- ASN1STOP
```

FIG. 6

25

FIG. 7

810: transmitting, by a network node of a non-terrestrial network, an indication of a base time window to a user equipment

820: acquiring time drift information of the non-terrestrial network

830: determining an adjustment value based at least on the time drift information;

840: transmitting the adjustment value to the user equipment, wherein the adjustment value is adjusting the base time window such that during the adjusted time window a predetermined at least one radio characteristic remains within predetermined limits

FIG. 8A

850: receiving, by a user equipment from a network node of a non-terrestrial network, an indication of a base time window

860: receiving an adjustment value

870: wherein the adjustment value is based at least on time drift information of the non-terrestrial network, determining an adjusted time window by adjusting the base time window based on the adjustment value

880: wherein during the adjusted time window a predetermined at least one radio characteristic remains within predetermined limits; and performing coverage enhancement procedure during the adjusted time window

FIG. 8B

Europäisches
Patentamt

European
Patent Office

Office européen
des brevets

**EUROPEAN SEARCH REPORT**

Application Number

EP 24 15 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "Summary EOM on 9.11.1 Coverage enhancement for NR NTN", 3GPP DRAFT; R1-2302230; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Athens, GR; 20230227 - 20230303 3 March 2023 (2023-03-03), XP052251916, Retrieved from the Internet: URL:https://www.3gpp.org/ftp/TSG_RAN/WG1_R L1/TSGR1_112/Docs/R1-2302230.zip R1-2302230_Summary EOM for 9.11.1 Coverage enhancement for NR NTN.docx [retrieved on 2023-03-03] * sections 4.2.3.4, 4.2.3.5 * ----- -/-- | 1-15 | INV. H04B7/185 H04W56/00 H04W84/06 |

TECHNICAL FIELDS SEARCHED (IPC)

H04B
H04W

The present search report has been drawn up for all claims

| Place of search | Date of completion of the search | Examiner |
|---|---|---|
| The Hague | 12 August 2024 | Arroyo Valles, |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAN ZHANG ET AL: "Discussion on coverage enhancement for NTN", 3GPP DRAFT; R1-2300704; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Athens, GR; 20230227 - 20230303 17 February 2023 (2023-02-17), XP052247850, Retrieved from the Internet: URL:https://www.3gpp.org/ftp/TSG_RAN/WG1_RL1/TSGR1_112/Docs/R1-2300704.zip R1-2300704 Discussion on coverage enhancement for NTN.docx [retrieved on 2023-02-17] * section 2.1 * | 1-15 | |

- - - - -

-/--

**TECHNICAL FIELDS SEARCHED (IPC)**

The present search report has been drawn up for all claims

| Place of search | Date of completion of the search | Examiner |
|---|---|---|
| The Hague | 12 August 2024 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 15 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEFAN ERIKSSON LÖWENMARK ET AL: "On coverage enhancements for NR NTN", 3GPP DRAFT; R1-2301726; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Athens, GR; 20230227 - 20230303 17 February 2023 (2023-02-17), XP052248856, Retrieved from the Internet: URL:https://www.3gpp.org/ftp/TSG_RAN/WG1_RL1/TSGR1_112/Docs/R1-2301726.zip R1-2301726 On coverage enhancements for NR NTN.docx [retrieved on 2023-02-17] * section 2.4 * | 1-15 | |

- - - - -

-/--

TECHNICAL FIELDS
SEARCHED     (IPC)

The present search report has been drawn up for all claims

| Place of search | Date of completion of the search | Examiner |
|---|---|---|
| The Hague | 12 August 2024 | Arroyo Valles, |

EPO FORM 1503 03.82 (P04C01)

page 3 of 4

Europäisches
Patentamt

European
Patent Office

Office européen
des brevets

**EUROPEAN SEARCH REPORT**

Application Number

EP 24 15 5661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU DING ET AL: "Discussion on coverage enhancements for NTN", 3GPP DRAFT; R1-2211247; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052221812, Retrieved from the Internet: URL:https://www.3gpp.org/ftp/TSG_RAN/WG1_R L1/TSGR1_111/Docs/R1-2211247.zip R1-2211247 Discussion on coverage enhancements for NTN.docx [retrieved on 2022-11-07] * section 3 * | 1-15 | |
| A | AKIHIKO NISHIO ET AL: "Discussion on coverage enhancement for NR-NTN", 3GPP DRAFT; R1-2300905; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Athens, GR; 20230227 - 20230303 17 February 2023 (2023-02-17), XP052248048, Retrieved from the Internet: URL:https://www.3gpp.org/ftp/TSG_RAN/WG1_R L1/TSGR1_112/Docs/R1-2300905.zip R1-2300905 NTN coverage.docx [retrieved on 2023-02-17] * section 3 * | 1-15 | TECHNICAL FIELDS SEARCHED (IPC) |

The present search report has been drawn up for all claims

| Place of search | Date of completion of the search | Examiner |
|---|---|---|
| The Hague | 12 August 2024 | Arroyo Valles, |